# EUROPÄISCHE PATENTSCHRIFT

(11) **EP 2 177 679 B1**
(45) Veröffentlichungstag und Bekanntmachung des Hinweises auf die Patenterteilung: **22.12.2010**
(21) Anmeldenummer: 08017969.0
(22) Anmeldetag: 14.10.2008
(51) Int. Cl.: E03F 7/04, F16K 1/20, F16K 15/03

(54) **Rückstauverschluss**
Non-return valve
Soupape anti retour

(43) Veröffentlichungstag der Anmeldung: 21.04.2010
(73) Patentinhaber: Kessel AG, 85101 Lenting (DE)
(72) Erfinder: Kessel, Bernhard, 85101 Lenting (DE)
(74) Vertreter: Grünecker, Kinkeldey, Stockmair & Schwanhäusser Anwaltssozietät

(56) Entgegenhaltungen:
- CA-C- 2 052 084
- DE-A1- 3 739 303
- DE-A1-102005 029 520
- DE-U1- 29 809 781
- US-A- 2 675 023

## Beschreibung

Die Erfindung betrifft einen Rückstauverschluss gemäß Oberbegriff des Patentanspruchs 1 oder 2.

Bei dem aus DE 37 39 303 A bekannten Rückstauverschluss ist die Klappe mittels eines Hebels manuell zwangsschließbar und zwangsöffenbar. Die Dichtung im Sitz oder die Dichtung an der Klappe ist als elastischer Hohlkörper ausgebildet, der aus einer Druckquelle mit einem gasförmigen Medium unter Druck setzbar oder druckentlastbar ist, um trotz eingeschlossener Verunreinigungen die notwendige Abdichtung zu erzeugen, bzw. leicht wieder geöffnet werden zu können.

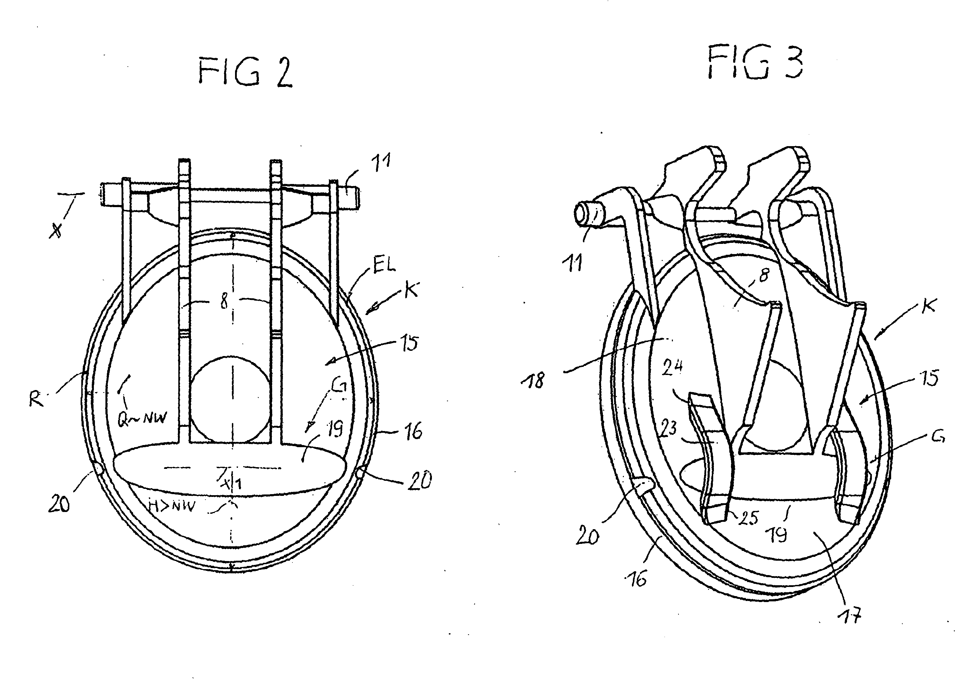

Der aus CA 2 052 084 A bekannte Rückstauverschluss weist eine an einem Arm um eine obenliegende, stationäre Achse schwenkbare Klappe (Fig. 2) auf, wobei zwischen der Achse und der Klappe ein Gelenk vorgesehen ist, in welchem die Klappe relativ zu dem Arm zusätzlich verschwenkbar ist. Bei Abwasserdurchfluss durch den Sitz oder bei Durchschieben eines Reinigungsdrahtes in Öffnungsrichtung des Rückstauverschlusses schwenkt die Klappe auf, wobei die Klappe und der damit über das Gelenk verbundene Arm zueinander eine Strecklage einnehmen, und die Klappe mit dem Arm nur um die stationäre Achse relativ zum Sitz aufschwingt. Der Sinn des Gelenks ist es, beim Zurückziehen des durch den Rückstauverschluss geschobenen Reinigungsdrahtes ein Festklemmen des Reinigungsdrahtes durch die dann in Schließrichtung schwenkende Klappe zu verhindern, in dem die am Reinigungsdraht anliegende Klappe im Gelenk relativ zum Arm abknickt und dabei mit dem Arm um die Achse angehoben wird, so dass der Reinigungsdraht problemlos zurückgezogen werden kann. Setzt sich im unteren Bereich des Sitzes ein Objekt fest, dann kommt die Klappe in ihrer Strecklage mit dem Arm nicht mehr in Schließlage auf dem Sitz.

Bei dem aus US 2 675 023 A bekannten Rückstauverschluss ist an der Klappe ein zusätzlicher elastischer und hufeneisenförmiger Lappen an der Rückstauseite montiert, der mit einem an der Rückstauseite geformten, hufeisenförmigen Sitz zusammenwirkt, um zu verhindern, dass im Falle einer das Schließen der Klappe am Sitz verhindernden, eingeklemmten Verunreinigung ein Durchgang offen bleibt, weil dann der elastische Lappen an dem hufeneisenförmigen Sitz abdichtet.

Bei dem aus DE 298 09 781 U1 bekannten Rückstauverschluss ist die Klappe eine Gummilasche, die sich bei einem Rückstau auf einen schräggestellten Sitz eines Rohrstutzens auflegt. Damit die Gummilasche unter dem Rückstaudruck nicht so stark durchgebogen oder in den Rohrstutzen hineingedrückt wird und die Dichtwirkung verloren geht, ist im Rohrstutzen wenigstens eine Strebe platziert, die für die Gummilasche eine Abstützung bildet.

Bei dem aus DE 10 2005 029 520 A bekannten Rückstauverschluss trägt die Klappe auf ihrer zum Sitz weisenden Stirnfläche eine Dichtauflage, die mit ihrem Umfangsrand in die Mündung des Sitzes einbringbar ist, wenn die Klappe in der Schließlage ist. Im Sitz ist innen ein elastischer Auslaufstutzen angeordnet, der in nicht verformtem Zustand über die Sitzmündung zur Rückstauseite vorsteht und bei der Schließbewegung der Klappe allmählich verformt wird, bis die Klappe in Schließlage ist. Aufgabe des elastischen Auslaufstutzens ist es, eine Verunreinigung zwischen der Mündung des Auslaufstutzens und der Klappe festzuklemmen, ehe die Klappe ihre Schließlage am Sitz erreicht, damit die Verunreinigung nicht zwischen der Klappe und dem Sitz eingeklemmt wird.

Der aus DE 19 910 254 C2 bekannte, in einen Inspektionsschacht eingebaute Rückstauverschluss wird mittels des Mechanismus manuell oder motorisch zwangsgeschlossen, bis die Klappe fest auf die Sitzmündung aufgepresst ist. Da die Kraftübertragung zum Zwangsschließen auf die Klappe speziell im letzten Teil des Schließhubs mit ungünstigem Hebelarm erfolgt, ist es schwierig, auch im unteren Klappenbereich einen ausreichenden Anpressdruck zu erzeugen. Im Abwasser enthaltene Festkörper werden manchmal beim Schließhub zwischen der Klappe und der Sitzmündung eingeklemmt, insbesondere bei fäkalienhaltigem Abwasser, wobei sich solche Hindernisse dann in dem Bereich festsetzen, in welchem die Schließkraft am schwächsten wirkt. Es klafft zwischen der ganzen Klappe und der Sitzmündung ein sich nach oben verjüngender Spalt auf, der bei einem Rückstau das Durchlecken von Abwasser durch einen relativ großen Querschnitt zulässt, selbst wenn der Mechanismus, gegebenenfalls verschleißbehaftet, seine maximale Schließkraft aufbringt. Die bekannte Klappe hat im übrigen im unteren Bereich einen halbkreisförmigen Rand, an den sich nach oben gerade und parallele Randabschnitte anschließen, die oben durch einen quer verlaufenden, im Wesentlichen geraden Rand verbunden sind. Die Sitzmündung ist genauso geformt und in Einbaulage schrägliegend angeordnet.

Der Erfindung liegt die Aufgabe zugrunde, einen Rückstauverschluss anzugeben, bei dem das Problem starker Leckage bei Zwangsschließung vermieden oder zumindest minimiert ist.

Die gestellte Aufgabe wird mit den Merkmalen des Patentanspruchs 1 oder 2 gelöst.

Aufgrund des Gelenks, das in der Klappe unterhalb der Mitte der Klappe oder im Sitz vorgesehen ist, lässt sich beim Zwangsschließen trotz eines im unteren Bereich eingeklemmten Fremdkörpers zumindest der obere Bereich der Klappe sauber dicht an den Sitz anlegen, während unter der Zwangsschließkraft zunächst der untenliegende Klappenbereich oder Sitzbereich weggebogen wird, so dass nur im unteren Bereich ein relativ kleiner Spalt mit engem Querschnitt offen bleibt. Diese bereits relativ zufriedenstellende Schließlage wird mit moderatem Krafteinsatz durch den Mechanismus erreicht. Die Rückstellkraft, die im Gelenk wirkt, drückt dann mit der Zeit den eingeklemmten Fremdkörper mehr und mehr zusammen oder in die Dichtung oder Dichtungen, bis auch im unteren Bereich eine dichte Absperrung erzielt ist. Die Rückstellkraft wirkt im unteren Bereich mit einem relativ günstigen Hebelarm um die Achse des Gelenks, das sich nach oben an dem Mechanismus abstützt. Es tritt bei einem Rückstau kaum mehr oder keine Leckage auf. Der Verschleiß im Mechanismus bleibt gering.

Zweckmäßig ist der untenliegende Klappenbereich oder Sitzbereich bei Anpressung der Klappe an den Sitz um das Gelenk aus einer mit dem restlichen Teil der Klappe oder des Sitzes fluchtenden Strecklage gegen die Rückstellkraft wegbiegbar. Dies bedeutet, dass dann, wenn beim Zwangsschließen oder beim selbsttätigen Schließen kein Fremdkörper eingeklemmt wird, die Klappe jeweils sofort dicht abschließt.

Bei einer Ausführungsform definiert das Gelenk ergonomisch günstig in der Klappe oder im Sitz eine zumindest im Wesentlichen zur obenliegenden Achse, um die die ganze Klappe schwenkbar ist, parallele Gelenkachse.

Zweckmäßig wird das Gelenk in der Klappe durch eine Strukturierung der Klappe definiert, vorzugsweise sogar einstückig in der Klappe ausgebildet. Bei einer Alternative könnte das Gelenk auch durch ein körperliches Scharnier gebildet werden, das zwei Teilbereiche der Klappe schwenkbar miteinander verbindet, und in dem eine Rückstellkraft wirkt.

Günstig lässt sich das Gelenk durch eine ovale Vertiefung in der ebenen oder bombierten Klappe und, vorzugsweise, durch zwei zum Klappenrand offene Ausschnitte bilden, die zumindest in etwa auf eine der Gelenkachse entsprechende, längere Hauptachse des Ovals der Vertiefung ausgerichtet sind, und jeweils im Abstand von der Vertiefung enden. Diese integrierte Strukturierung der Klappe bildet nicht nur das Gelenk für den untenliegenden Klappenbereich, sondern auch eine integrierte Feder, die zumindest bis in die Strecklage die gesamte oder einen Teil der Rückstellkraft erzeugt.

Als zusätzliche Maßnahme zu der vorerwähnten Strukturierung, oder grundsätzlich zum Ausbilden des Gelenks, kann die Klappe im Gelenk eine gegenüber der umgebenden Wandstärke vergrößerte oder verkleinerte Wandstärke aufweisen, um sozusagen mit verringerter Wandstärke und gegebenenfalls verdichtetem Material eine Art vorgespanntes Filmscharnier zu formen.

Bei entsprechender Ausbildung, wie erwähnt, kann die Rückstellkraft von dem Gelenk selbst erzeugt werden, wenn dieses selbsttätig rückstellend ist. Alternativ oder additiv kann die Rückstellkraft oder zumindest eine zusätzliche Rückstellkraft durch wenigstens eine an der Klappe angeordnete Feder erzeugt werden, vorzugsweise von wenigstens einer am restlichen Teil der Klappe festgelegten oder integral angeformten, das Gelenk überbrückenden Biegefeder. Speziell eine Biegefeder kann sehr weit nach unten in den untenliegenden Bereich der Klappe greifen und ihre Federkraft bei einer Zwangsschließung mit günstigem Hebelarm möglichst nahe bei einem unten eingeklemmten Fremdkörper übertragen, um diesen mit der Zeit zusammenzuquetschen oder in die Dichtung hineinzudrücken, um auch so, ggf. nacheilend, im unteren Bereich des Rückstauverschlusses eine einwandfreie Dichtsituation zu erzeugen, nachdem im oberen Bereich ohnedies durch den Mechanismus eine einwandfreie Abdichtung herbeigeführt wurde.

Bei einer zweckmäßigen Ausführungsform ist am restlichen Teil der Klappe und angrenzend zum und oberhalb des Gelenks wenigstens ein Steg mit einer Nockenbahn für den Mechanismus vorgesehen, wobei, vorzugsweise, der Steg die Klappe mit einer die Achse definierenden Welle verbinden kann, mit der die Klappe am Sitz oder am Einbauort eingehängt wird. Der Steg überträgt die von oben nach unten gerichtete Zwangsschließkraft direkt auf den restlichen Teil der Klappe und auf das Gelenk.

Günstig ist es, wenn die Dichtung der Klappe auch die Ausschnitte der Klappe im Bereich des Gelenks abdichtet.

Bei einer wichtigen Ausführungsform sind in Einbaulage die Sitzmündung und die daran anliegende Klappe gegenüber einer Durchflussachse des Rückstauverschlusses schräggestellt, vorzugsweise sogar mit einem Winkel bis zu 45°, zumindest mit einem Winkel von etwa 10°, und nach oben schräg gegen die Durchflussrichtung. Diese Schräglage begünstigt das selbsttätige Schließen der Klappe unter dem Eigengewicht um die obenliegende Achse, und schafft auch beim Zwangsschließen günstigere Kraftverhältnisse für den Mechanismus.

Entsprechend eines besonders wichtigen Aspekts der Erfindung haben die Klappe und die Sitzmündung eine symmetrisch ovale Form mit einer zur Achse und zur Gelenkachse in der Klappe zumindest annähernd senkrechten längeren Ovalachse. Vorzugsweise wird eine elliptische Form gewählt, annähernd entsprechend einer Verschneidungslinie zwischen dem der Rohr-Nennweite des rohrförmig ausgebildeten Sitzes entsprechenden Kreiszylinder mit der Durchflussachse als Zylinderachse und einer unter dem Winkel der Schrägstellung der Sitzmündung liegenden Ebene. Die ovale oder elliptische Form hat auch den Vorteil, in Querrichtung Einbauraum für die Klappe einzusparen und günstigere Durchströmverhältnisse zu erzeugen. Wenn nämlich die Sitzmündung schräggestellt ist und eine kreisrunde Klappe auf der dann kreisrunden Sitzmündung aufläge, wird entweder in Querrichtung der dem Nennquerschnitt entsprechende Querschnitt an der Sitzmündung eingeschnürt oder, falls in Querrichtung die Sitzmündung eine Weite entsprechend der Nennweite hat, eine Aufweitung zwischen dem Rohrquerschnitt im Sitz und der Sitzmündung gebildet, wodurch soweit Totzonen entstehen, in denen sich Ablagerungen sammeln. Die ovale oder elliptische Form vermeidet dies, da sozusagen der kreisrunde Querschnitt entsprechend der Nennweite übergangsfrei durchgeht, d.h. dank der ovalen Form in einer Projektion in Richtung der Durchflussachse weitgehend exakt der Vollkreisquerschnitt der Rohr-Nennweite vorliegt.

Zweckmäßig bilden der Sitz und die daran einhängbare Klappe eine Einsatzteil-Baugruppe für einen die Rohr-Nennweite definierenden, Zulauf- und Ablaufrohrstutzen aufweisenden Inspektions- oder Rückstauschacht. Dadurch lässt sich der Sitz und/oder die Klappe jederzeit ausbauen, austauschen oder warten.

Ausführungsformen des Erfindungsgegenstandes werden anhand der Zeichnung erläutert. Es zeigen:
- Fig. 1: eine perspektivische Längsschnittansicht eines in einen Inspektions- oder Rück- stauschacht eingebauten Rückstauverschlusses in Zwangsschließlage,
- Fig. 2: eine Draufsicht einer Klappe des Rückstauverschlusses,
- Fig. 3: eine Perspektivansicht einer weiteren Ausführungsform der Klappe,
- Fig. 4: eine Perspektivansicht einer weiteren Ausführungsform der Klappe, und
- Fig. 5: eine perspektivische Achsschnittdarstellung des Rückstauverschlusses in einer geänderten Ausführungsform.

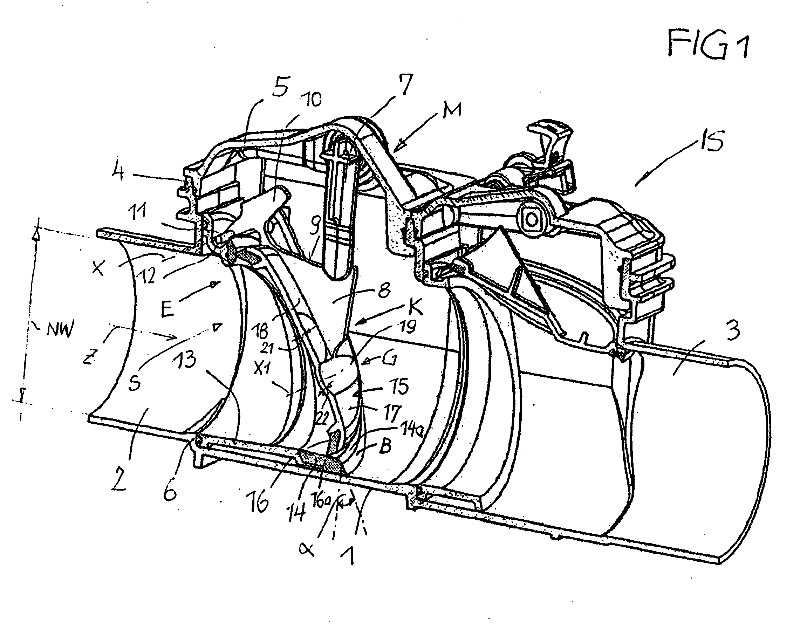

Fig. 1 zeigt einen Inspektions- oder Rückstauschacht IS für abwassertechnische Zwecke, insbesondere für fäkalienhaltiges Abwasser. In einen Grundkörper 1 mündet ein Zulaufrohrstutzen 2 und ein Auslaufrohrstutzen 3, wobei der Zulaufrohrstutzen 2 eine Rohrnennweite NW definiert und kreisrund ist. Auf einem obenliegenden Rahmen 4 des Grundkörpers 1 ist ein Deckel 5 lösbar festgelegt, in welchem ein Mechanismus M zumindest zum Zwangsschließen eines Rückstauverschlusses S gelagert ist, bei der gezeigten Ausführungsform sogar ein Mechanismus M zum Zwangsschließen und zum Zwangsöffnen des Rückstauverschlusses S. Der Mechanismus M besitzt einen manuell oder motorisch verdrehbaren Hebel 7, der wahlweise an zumindest einem Steg 8 mit einer Nockenbahn 9 und einem Öffnungshaken 10 angreift und in der in Fig. 1 gezeigten Stellung den Rückstauverschluss zwangsgeschlossen hält. Wird der Hebel 7 im Uhrzeigersinn verdreht, dann greift er schließlich am Öffnungshaken 10 an und zieht er eine Klappe K aus der gezeigten Schließstellung in eine Öffnungsstellung, in der die Klappe K offen gehalten bleibt. Wird danach der Hebel 7 etwas entgegengesetzt dem Uhrzeigersinn in eine schräge Position verdreht, kann die Klappe K unter ihrem Eigengewicht um eine obenliegende Achse X selbsttätig schwenken, beispielsweise wenn Abwasser entlang der Durchflussachse Z von links nach rechts durchfließt und die Klappe aufdrückt, oder wenn im Falle eines Rückstaus von rechts eintretendes Abwasser die Klappe K selbsttätig in die Schließlage bringt und in der Schließlage hält.

Die Klappe K weist eine querliegende Welle 11 auf, die die obenliegende Achse X definiert und in eine Fassung 12 eines Sitzes 13 (oder alternativ des Grundkörpers 1, nicht gezeigt) eingehängt ist.

Der Sitz 13 ist rohrförmig (z. B. mit der Rohr-Nennweite NW) ausgebildet und besitzt eine unter einem Winkel α geneigte ebene Sitzmündung B, die nach oben schräg entgegengesetzt zur Durchflussrichtung entlang der Durchflussachse Z geneigt ist.

In der gezeigten Ausführungsform ist sowohl an der Klappe K eine Dichtung 16 angebracht, als auch am Sitz 13 eine Dichtung 14, wobei die Dichtung 14 die Sitzmündung B definiert und in Richtung der Durchflussachse Z unten länger ist als oben. Die Dichtung 16 der Klappe läuft in einer umlaufenden spitzen Dichtlippe 16a aus, während die Dichtung 14 des Sitzes 13 eine mündungsseitige Aufweitung 14a besitzt, so dass die Dichtlippe 16a in der gezeigten Schließlage im unteren Bereich des Rückstauverschlusses geringfügig in die Mündung B des Sitzes 13 eindringt.

Die Klappe K besitzt z. B. einen ebenen oder bombierten, ggf. versteiften Grundkörper 15 mit einem unteren Klappenbereich 17 und einem restlichen Teil 18 der Klappe K, zwischen denen sich ein Gelenk G mit einer zur Achse X im Wesentlichen parallelen Gelenkachse X1 befindet.

In der gezeigten Ausführungsform wird das Gelenk G durch eine in den Klappenkörper strukturell integrierte ovale Vertiefung 19 definiert, deren längere Ovalachse etwa der Gelenkachse X1 entspricht. Gegebenenfalls ist die Wandstärke 22 in der Vertiefung 19 geringer, z.B. durch Verdichten des Materials, oder stärker als die Wandstärke 21 in angrenzenden Bereichen.

Gemäß Fig. 2 gehören zum Gelenk G der Klappe K ferner, vorzugsweise, Ausschnitte 20 im Randbereich des Klappenkörpers 15. Die Ausschnitte 20 sind in etwa auf die Gelenkachse X1 ausgerichtet, zum Randbereich offen, und enden im Abstand von der Vertiefung 19. Diese Ausschnitte 20 werden, vorzugsweise, von der Dichtung 16 der Klappe K verschlossen. Fig. 2 zeigt ferner zwei beabstandete parallele Stege am Klappenkörper 15, die den Klappenkörper 15 mit der Welle 11 verbinden, obwohl auch nur ein Steg oder ein Ansatz vorgesehen sein könnte.

Die Form der Klappe K und der Sitzmündung B kann kreisrund sein. Gemäß eines wichtigen Aspekts der Erfindung hat die Klappe K (wie auch die Sitzmündung B) jedoch eine achsensymmetrisch ovale Form mit zur Achse X senkrechter Hochachse H des Ovals und zur Achse X paralleler Querachse Q des Ovals. Besonders bevorzugt definiert die ovale Form R sogar eine Ellipse EL, annähernd entsprechend einer Verschneidungslinie zwischen dem der Rohr-Nennweite NW des Sitzes 13 entsprechenden Kreiszylinder mit der Durchflussachse Z als Zylinderachse und einer unter dem Winkel α der Schrägstellung der Sitzmündung B liegenden Ebene. Dies kann bedeuten, dass die Querachse Q annähernd der Nennweite NW entspricht, während die Hochachse H größer ist als die Nennweite NW. Das Gelenk G befindet sich unterhalb der Mitte der Höhenerstreckung der Klappe K, vorzugsweise im unteren Höhendrittel.

Fig. 3 zeigt eine andere Ausführungsform der Klappe K, die entweder kreisrund oder oval entsprechend Fig. 2 ist, und zum Erzeugen oder Unterstützen der Rückstellkraft des Gelenks G mit zumindest einer Biegefeder 23 ausgestattet ist. Die Biegefeder 23 an jeweils einer Seite eines Steges 8 ist mit einem Ende 24 mit dem restlichen Teil 18 des Klappenkörpers verbunden, z. B. einstückig angeformt oder festgeklebt, überbrückt das Gelenk G und stützt sich mit ihrem anderen Ende 25 im untenliegenden Bereich 17 des Klappenkörpers 15 ab. Die Anzahl der Biegefedem 23 ist beliebig und richtet sich nach der gewünschten Stärke der Rückstellkraft des Gelenks G.

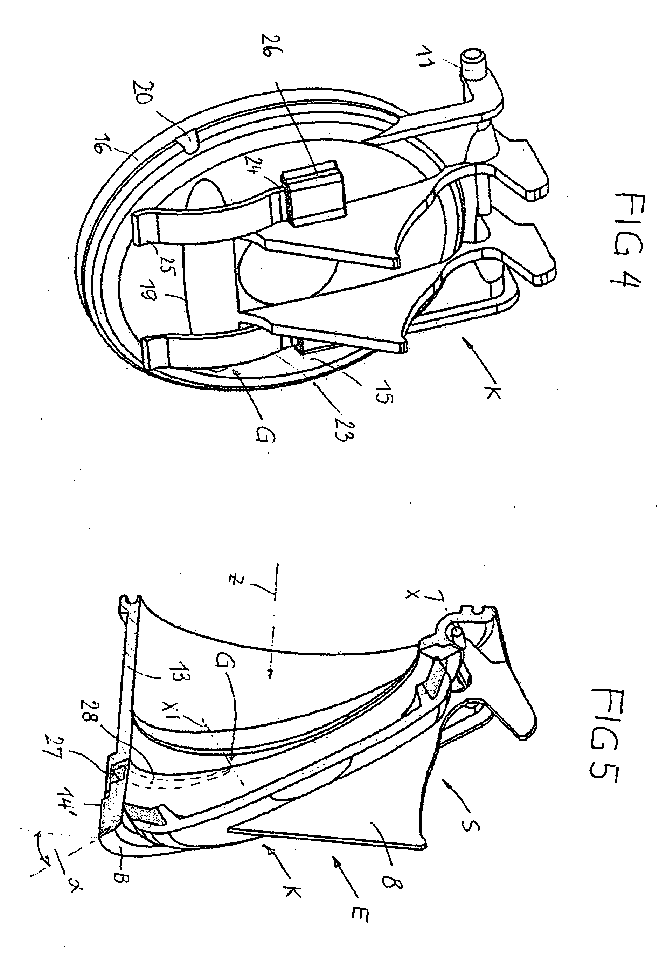

Im Gelenk G wirkt somit die Rückstellkraft, die beim Wegbiegen des unteren Klappenbereiches 17 aus einer Strecklage in Bezug auf den restlichen Teil 18 der Klappe wirksam wird, und den unteren Klappenbereich 17 wieder in die Strecklage zurückzudrücken sucht. Diese Rückstellkraft wird zweckmäßig vom Gelenk G selbst erzeugt, kann jedoch durch in Fig. 1 und 2 nicht, hingegen in Fig. 3 und 4 gezeigte Federelemente unterstützt oder grundsätzlich erzeugt werden.

Bei der Ausführungsform in Fig. 4 ist jede Biegefeder nicht einstückig am Klappenkörper 15 angeformt, sondern mit dem oberen Ende 24 in eine am Klappenkörper 15 angeformte oder angebrachte Halterung 26 eingesteckt, derart, dass sie das Gelenk G überbrückt und mit ihrem untenliegenden Ende 25 im unteren Klappenbereich 17 nahe beim Randbereich des Klappenkörpers 15 wirkt.

Fig. 5 verdeutlicht eine andere Ausführungsform des Rückstawerschlusses S, bei dem das Gelenk G im Sitz 13 bzw. sogar in der Dichtung 14' des Sitzes 13 angeordnet ist. Beispielsweise wird das Gelenk G mit der Gelenkachse X1 hier dadurch gebildet, dass das Material der Dichtung 14' in einem zwickelförmigen Bereich 27 an der Außenseite der Dichtung 14 ausgehöhlt ist und somit einen untenliegenden, um die Gelenkachse X1 im Gelenk G biegbaren Dichtungsbereich oder Sitzbereich 28 definiert.

Die Dichtung 14 bzw. 14' kann in Zweikomponententechnik mit dem Sitz 13 einstückig geformt sein, wie auch die Dichtung 16 der Klappe K. In der Ausführungsform der Fig. 5 ist in der Klappe K kein Gelenk vorgesehen, obwohl es möglich wäre, sowohl im Sitz bzw. der Dichtung 14' des Sitzes 13 als auch in der Klappe K jeweils ein Gelenk G vorzusehen.

Ferner wäre es denkbar, nur an der Klappe K oder nur am Sitz 13 eine Dichtung vorzusehen. Auch muss in der Schließlage nicht notwendigerweise der Außenrand der Klappe K oder eine Dichtlippe 16a der Dichtung 16 der Klappe K zumindest bereichsweise in die Dichtung 14, 14' des Sitzes 13 eindringen, sondern es könnte eine in der Schließlage stumpfe Dicht-Auflage vorgesehen sein.

Die Klappe K bildet zusammen mit dem Sitz 13 eine Einsatzteil-Baugruppe E, die zum Austausch oder zu Wartungszwecken entnommen bzw. eingesetzt werden kann, und beispielsweise durch den in Fig. 1 gezeigten Deckel 5 positioniert wird.

Zweckmäßig sind sowohl die Klappe K als auch der Sitz 13 mit oder ohne Dichtung 14, 16, 14' Kunststoffformteile, insbesondere Spritzgussteile.

Die Biegefeder 23 könnte aus dem gleichen Material wie die Klappe hergestellt sein, oder auch aus Metall, wie Federstahl. Bei einer nicht gezeigten Alternative könnte das Gelenk G in der Klappe K auch durch ein Scharnier gebildet werden, in welchem der untere Klappenbereich 17 mit dem restlichen Teil 18 schwenkbar verbunden ist, und mit welchem eine oder zumindest eine Feder kombiniert ist, um die Rückstellkraft bis in die Strecklage zu erzeugen.

## Patentansprüche

1. Rückstauverschluss (S) für die Abwassertechnik, insbesondere für fäkalienhaltiges Abwasser, mit einer um eine obenliegende Achse (X) relativ zu einem Sitz (13) mit ebener Sitzmündung (B) schwenkbaren Klappe (K), einer Dichtung (14, 16) am Sitz (13) oder/und an der Klappe (K), und einem an der Klappe (K) angreifenden Mechanismus (M) zumindest zum Zwangsschließen des Rückstauverschlusses (S) durch Anpressen der Klappe (K) gegen den Sitz (13), **dadurch gekennzeichnet, dass** in der Klappe (K) zwischen der Achse (X) und einem von der Achse (X) am weitesten entfernten, untenliegenden Klappenbereich (17) unterhalb der Mitte der Klappe ein Gelenk (G) vorgesehen ist, in dem der Klappenbereich (17) relativ zu einem restlichen Teil (18) der Klappe (K) gegen eine in der Klappe (K) erzeugte Rückstellkraft biegbar ist.

2. Rückstauverschluss (S) für die Abwassertechnik, insbesondere für fäkalienhaltiges Abwasser, mit einer um eine obenliegende Achse (X) relativ zu einem Sitz (13) mit ebener Sitzmündung (B) schwenkbaren Klappe (K), einer Dichtung (14, 16) am Sitz (13) oder/und an der Klappe (K), und einem an der Klappe (K) angreifenden Mechanismus (M) zumindest zum Zwangsschließen des Rückstauverschlusses (S) durch Anpressen der Klappe (K) gegen den Sitz (13), **dadurch gekennzeichnet, dass** in dem Sitz (13) zwischen der Achse (X) und einem von der Achse (X) am weitesten entfernten, untenliegenden Sitzbereich (28) ein Gelenk (G) vorgesehen ist, in dem der Sitzbereich (28) relativ zum restlichen Teil des Sitzes (13) gegen eine Rückstellkraft biegbar ist.

3. Rückstauverschluss nach Anspruch 1 oder 2, **dadurch gekennzeichnet, dass** der Klappenbereich (17) oder Sitzbereich (28) bei Anpressung der Klappe (K) an die Sitzmündung (B) um das Gelenk (G) aus einer mit dem restlichen Teil (18) der Klappe oder der Sitzmündung fluchtenden Strecklage gegen die Rückstellkraft wegbiegbar ist.

4. Rückstauverschluss nach Anspruch 1 oder 2, **dadurch gekennzeichnet, dass** das Gelenk (G) in der Klappe (K) oder im Sitz (13) eine zumindest im Wesentlichen zur Achse (X) parallele Gelenkachse (X1) definiert.

5. Rückstauverschluss nach Anspruch 1, **dadurch gekennzeichnet, dass** das Gelenk (G) in der Klappe (K) durch eine Strukturierung gebildet ist, vorzugsweise mit der Klappe (K) einstückig geformt ist.

6. Rückstauverschluss nach Anspruch 5, **dadurch gekennzeichnet, dass** das Gelenk (G) durch eine ovale Vertiefung (19) in der ebenen oder bombierten Klappe (K) und, vorzugsweise, durch zwei zum Klappenrand offene Ausschnitte (20) gebildet wird, die zumindest in etwa auf eine der Gelenkachse (X1) entsprechende, längere Hauptachse der Vertiefung ausgerichtet sind und jeweils im Abstand von der Vertiefung (19) enden.

7. Rückstauverschluss nach Anspruch 5 oder 6, **dadurch gekennzeichnet, dass** die Klappe (K) im Gelenk (G) eine gegenüber der umgebenden Wandstärke (21) vergrößerte oder verkleinerte Wandstärke (22) aufweist.

8. Rückstauverschluss nach wenigstens einem der vorhergehenden Ansprüche, **dadurch gekennzeichnet, dass** das Gelenk (G) bis zur Strecklage zwischen dem restlichen Teil (18) und dem Klappenbereich (17) selbsttätig rückstellend ist und/oder dass eine Rückstellkraft durch wenigstens eine an der Klappe angeordnete Feder (23) erzeugt wird, vorzugsweise durch wenigstens eine am restlichen Teil (18) der Klappe (K) festgelegten oder integral angeformte, das Gelenk (G) überbrückende Biegefeder.

9. Rückstauverschluss nach wenigstens einem der vorhergehenden Ansprüche, **dadurch gekennzeichnet, dass** an der Klappe (K) angrenzend an das Gelenk (G) im restlichen Teil (18) der Klappe (K) wenigstens ein Steg (8) mit einer Nockenbahn (9) für den Mechanismus vorgesehen ist, wobei, vorzugsweise, der Steg (8) die Klappe (K) mit einer die Achse (X) definierenden Welle verbindet.

10. Rückstauverschluss nach wenigstens einem der vorhergehenden Ansprüche, **dadurch gekennzeichnet, dass** in geschlossener Einbaulage die Sitzmündung (B) und die an der Sitzmündung (B) anliegende Klappe (K) gegenüber einer Durchflussachse (Z) des Rückstauverschlusses (S) nach oben schräg gegen die Durchflussrichtung schräggestellt sind, vorzugsweise mit einem Winkel (α) bis zu 45°.

11. Rückstauverschluss nach wenigstens einem der vorhergehenden Ansprüche, **dadurch gekennzeichnet, dass** die Klappe (K) und die Sitzmündung (B) jeweils eine symmetrisch, ovale Form (R) mit einer zur Achse (X) zumindest annähernd senkrechten, längeren Ovalachse (H) haben, vorzugsweise eine elliptische Form (EL) annähernd entsprechend einer Verschneidungslinie zwischen dem der Rohr-Nennweite (NW) des Sitzes (13) entsprechenden Kreiszylinder mit der Durchflussachse (Z) als Zylinderachse und einer unter dem Winkel (α) der Schrägstellung der Sitzmündung (B) liegenden Ebene.

12. Rückstauverschluss nach wenigstens einem der vorhergehenden Ansprüche, **dadurch gekennzeichnet, dass** der Sitz (13) und die daran einhängbare Klappe (K) eine Einsatzteil-Baugruppe (E) für einen Inspektions- und/oder Rückstauschacht (IS) bilden.

## Claims

1. Backwater control valve (S) for the wastewater technology, in particular for waste water containing fecal matter, comprising a flap (K) which is pivotable relative to a seat (13) having a planar seat mouth (B) and about an overhead axis (X), a sealing (14, 16) at the seat (13) and/or at the flap (K), and a mechanism (M) engaging at the flap (K) at least for closing the backwater control valve (S) by force and by pressing the flap (K) against the seat (13) **characterised in that** a hinge (G) is provided in the flap (K) underneath the middle of the flap between the axis (X) and a flap region (17) which is furthest away from the axis (X), and that the flap region (17) can be bent in the hinge (G) relative to a remaining part (18) of the flap (K) and against a returning force produced in the flap (K).

2. Backwater control valve (S) for the wastewater technique in particular for wastewater containing fecal matter, comprising a flap (K) which is pivotable relative to a seat (13) having a planar seat mouth (B) and about an overhead axis (X), a sealing (14, 16) at the seat (13) and/or at the flap (K), and a mechanism (M) engaging at the flap (K) at least for closing the backwater control valve (S) by force and by pressing the flap (K) against the seat (13) **characterised in that** a hinge (G) is provided in the seat (13) between the axis (X) and a lower seat region (28) which is furthest away from the axis (X), and that the seat region (28) can be bent in the hinge (G) relative to the remaining part of the seat (13) and counter to a return force.

3. Backwater control valve according to claim 1 or 2, **characterised in that** the flap region (17) or the seat region (28) can be bent about the hinge (G) counter to the return force out of a stretched position aligned with the remaining part (18) of the flap or of the seat mouth while the flap (K) is pressed against the seat mouth (B).

4. Backwater control valve according to claim 1 or 2, **characterised in that** the hinge (G) provided in the flap (K) or in the seat (13) defines a hinge axis (X1) which is substantially parallel to the axis (X).

5. Backwater control valve according to claim 1, **characterised in that** the hinge (G) in the flap (K) is formed by a structure, and is, preferably, formed unitary with the flap (K).

6. Backwater control valve according to claim 5, **characterised in that** the hinge (G) is formed by a oval depression (19) in the planar or bossed flap (K) and, preferably two cut-outs (20) being at least substantially aligned with a longer main axis of the oval of the depression corresponding to the hinge axis (X1), which cut-outs (20), respectively terminate inside the flap (K) distant from the depression (19).

7. Backwater control valve according to claim 5 or 6, **characterised in that** the flap (K) has a wall thickness (22) in the hinge (G) which is increased or decreased in relation to the surrounding wall thickness (21).

8. Backwater control valve according to at least one of the preceding claims, **characterised in that** the hinge (G) either automatically returns into the stretched position between the remaining part (18) and the flap region (17) and/or that the return force is generated by at least one spring (23) provided at the flap, preferably by at least one bending spring bridging the hinge (G) and being attached to the remaining part (18) of the flap (K) or being unitarily formed with the remaining part (18) of the flap (K).

9. Backwater control valve according to at least one of the preceding claims, **characterised in that** at least one land (8) having a cam surface (9) for the mechanism (M) is provided at the flap (K) in the remaining part (18) of the flap (K) adjacently to the hinge (G), wherein, preferably, the land (8) connects the flap (K) with a shaft defining the axis (X).

10. Backwater control valve according to at least one of the preceding claims, **characterised in that** in closed mounting position of the backwater control valve both the seat mouth (B) and the flap (K) abutting at the seat mouth (B) are positioned obliquely in relation to a through flow axis (Z) of the backwater control valve (S) counter to the through flow direction and obliquely upwardly, preferably at an angle (α) up to about 45°.

11. Backwater control valve according to at least one of the preceding claims, **characterised in that** the flap (K) and the seat mouth (B) have a respective symmetric oval form (R) with a longer oval axis (H) extending at least substantially perpendicular to the axis (X), preferably have an elliptic form (EL) substantially corresponding with a line of the intersection between the circular cylinder according
to the tube nominal diameter (NW) of the seat (13) with the through flow axis (Z) defining the cylinder axis, and a plane corresponding to the angle (α) of the inclination of the seat mouth (B).

12. Backwater control valve according to at least one of the preceding claims, **characterised in that** the seat (13) and the flap (K) which can be hung-in at the seat commonly constitute an insertion part structural group (A) intended for an inspection shaft and/or backwater shaft (IS).

## Revendications

1. Soupape anti-retour (S) pour les eaux usées, en particulier pour les eaux usées contenant des matières fécales, avec un clapet (K) apte à pivoter sur un axe supérieur (X) par rapport à un siège (13) à ouverture de siège plane (B), avec un joint d'étanchéité (14, 16) sur le siège (13) ou/et sur le clapet (K), et avec un mécanisme (M) agissant sur le clapet (K), au moins pour la fermeture forcée de la soupape anti-retour (S) grâce à l'application du clapet (K) contre le siège (13), **caractérisée en ce que** dans le clapet (K), il est prévu, entre l'axe (X) et la zone de clapet inférieure (17) la plus éloignée de l'axe (X), au-dessous du milieu du clapet (K), une articulation (G) dans laquelle la zone de clapet (17) est apte à être courbée par rapport au reste (18) du clapet (K), à l'encontre d'une force de rappel produite dans le clapet (K).

2. Soupape anti-retour (S) pour les eaux usées, en particulier pour les eaux usées contenant des matières fécales, avec un clapet (K) apte à pivoter sur un axe supérieur (X) par rapport à un siège (13) à ouverture de siège plane (B), avec un joint d'étanchéité (14, 16) sur le siège (13) ou/et sur le clapet (K), et avec un mécanisme (M) agissant sur le clapet (K), au moins pour la fermeture forcée de la soupape anti-retour (S) grâce à l'application du clapet (K) contre le siège (13), **caractérisée en ce que** dans le siège (13), il est prévu, entre l'axe (X) et la zone de siège inférieure (28) la plus éloignée de l'axe (X), une articulation (G) dans laquelle la zone de siège (28) est apte à être courbée par rapport au reste du siège (13), à l'encontre d'une force de rappel.

3. Soupape anti-retour selon la revendication 1 ou 2, **caractérisée en ce que** la zone de clapet (17) ou la zone de siège (28), lorsque le clapet (K) est pressé contre l'ouverture de siège (B), est apte à être courbée sur l'articulation (G) à l'encontre de la force de rappel pour être éloignée d'une position allongée dans l'alignement du reste (18) du clapet ou de l'ouverture de siège.

4. Soupape anti-retour selon la revendication 1 ou 2, **caractérisée en ce que** l'articulation (G) prévue dans le clapet (K) ou dans le siège (13) définit un axe d'articulation (X1) au moins globalement parallèle à l'axe (X).

5. Soupape anti-retour selon la revendication 1, **caractérisée en ce que** l'articulation (G) prévue dans le clapet (K) est formée par une structuration, et est de préférence formée d'une seule pièce avec le clapet (K).

6. Soupape anti-retour selon la revendication 5, **caractérisée en ce que** l'articulation (G) est formée par un creux ovale (19) dans le clapet (K) plan ou bombé, et de préférence par deux découpes (20) ouvertes en direction du bord du clapet, qui sont alignées au moins approximativement sur un axe principal long du creux qui correspond à l'axe d'articulation (X1), et qui se terminent chacune à une certaine distance du creux (19).

7. Soupape anti-retour selon la revendication 5 ou 6, **caractérisée en ce que** le clapet (K) présente dans l'articulation (G) une épaisseur de paroi (22) accrue ou réduite par rapport à l'épaisseur de paroi environnante (21).

8. Soupape anti-retour selon l'une des revendications précédentes, **caractérisée en ce que** l'articulation (G) revient toute seule jusqu'à la position allongée entre le reste (18) du clapet et la zone de clapet (17) et/ou **en ce qu'**une force de rappel est produite par au moins un ressort (23) disposé sur le clapet, de préférence par au moins un ressort qui est fixé ou qui est rapporté d'une seule pièce sur le reste (18) du clapet (K) et qui couvre l'articulation (G).

9. Soupape anti-retour selon l'une au moins des revendications précédentes, **caractérisée en ce qu'**il est prévu sur le clapet (K), près de l'articulation (G) dans le reste (18) du clapet (K) au moins une nervure (8) avec une glissière à came (9) pour le mécanisme, la nervure (8) reliant de préférence le clapet (K) à un arbre qui définit l'axe (X).

10. Soupape anti-retour selon l'une au moins des revendications précédentes, **caractérisée en ce que** dans la position de montage fermée, l'ouverture de siège (B) et le clapet (K) appliqué contre celle-ci sont inclinés par rapport à un axe de passage (Z) de la soupape anti-retour (S), vers le haut en direction du sens de passage, de préférence suivant un angle (α) allant jusqu'à 45°.

11. Soupape anti-retour selon l'une au moins des revendications précédentes, **caractérisée en ce que** le clapet (K) et l'ouverture de siège (B) ont une forme ovale symétrique (R), avec un axe d'ovale long (H) au moins approximativement vertical, et une forme elliptique (EL) qui correspond approximativement à une ligne de coupe entre le cylindre rond correspondant à la largeur nominale de tuyau (NW) du siège (13), avec l'axe de passage (Z) comme axe de cylindre, et un plan situé suivant l'angle (α) de l'inclinaison de l'ouverture de siège (B).

12. Soupape anti-retour selon l'une au moins des revendications précédentes, **caractérisée en ce que** le siège (13) et le clapet (K) apte à être accroché à celui-ci forment un ensemble de rechange (E) pour un puits de contrôle et/ou anti-retour (IS).
